# EUROPEAN PATENT APPLICATION

(11) **EP 4 737 707 A1**
(43) Date of publication of application: **06.05.2026**
(21) Application number: 24209858.0
(22) Date of filing: 30.10.2024
(51) Int. Cl.: F03D 1/06, F03D 80/00

(54) **SERRATED PANEL FOR A WIND TURBINE ROTOR BLADE**

(71) Applicant: Nordex Energy SE & Co. KG, 22419 Hamburg (DE)
(72) Inventor: Lipka, Thomas, 22419 Hamburg (DE); Rautmann, Christof, 22419 Hamburg (DE); Dibbern, Adrian, 22419 Hamburg (DE)
(74) Representative: Hauck Patent- und Rechtsanwälte PartmbB

(57) **Abstract**

A serrated panel for a trailing edge of a wind turbine rotor blade, the serrated panel comprising
• a plurality of teeth, each tooth having a tip, a base, two edges running from the tip to the base, a pressure side surface and a suction side surface, and
• a plurality of vanes arranged side by side with a gap between each pair of adj acent vanes, each vane beginning at one of said edges and extending rearwards in a longitudinal direction, wherein each vane has a vane length, a vane width and a vane height, characterized in that
• the pressure side surfaces of the teeth comprise a base surface and a plurality of humps, wherein each hump has a crest and a sloped, circumferential surface that transitions smoothly into the base surface.

## Description

The invention relates to a serrated panel for the trailing edge of a wind turbine rotor blade.

These panels have been suggested for noise reduction in wind turbines. The panels are designed with a series of teeth placed along the trailing edge of the wind turbine rotor blade, which can help reducing aerodynamic noise generated by the rotor blade. In particular, the serrations on the trailing edge of a wind turbine rotor blade change the local flow behavior at the trailing edge and the interaction of turbulent vortices with the trailing edge, thereby reducing the overall noise level produced by the wind turbine.

Studies have shown that the use of serrated panels can reduce the noise level of wind turbines significantly. This can help to make wind turbines more acceptable to local communities by reducing the impact of noise pollution.

WO 2022/135751 A1 shows a trailing edge panel for a wind turbine rotor blade. It comprises a base element and serrations extending from a rear end of the base element. On one side of the serrations, rib-shaped protruding elements are arranged along a longitudinal direction of the serrations. The protruding elements extend in a direction towards a leading edge of the wind turbine rotor blade beyond the rear end of the base element. The protruding elements may be shaped as a finlet or as a three-dimensional, cone-shaped structure.

WO 2022/205817 A1 shows a serrated panel having a base part and a plurality of serrations. The serrations are provided with secondary teeth. In an embodiment, one side of the serrated panel is provided with ribs ending on the secondary teeth.

EP 3 164 599 B1 shows a serrated panel having serrations and U-shaped vanes arranged along a longitudinal direction of the serrations.

EP 3 348 826 B1 shows a serrated panel having serrations and vanes arranged on both sides of the serrations along a longitudinal direction of the serrations. On one side of the panel, the vanes extend over an outer surface of an attachment section.

EP 2 851 555 B1 shows a wind turbine rotor blade with a trailing edge provided with a number of serrations. One side of the serrations is provided with vanes.

EP 2 867 523 B1 shows a serrated panel for a wind turbine rotor blade having serrations provided with stiffening ribs.

WO 2020/224737 A1 shows a wind turbine rotor blade provided with serrations projecting from a trailing edge and distinct fins projecting from a surface of the blade arranged upstream of the serrations.

From the document EP 3 268 605 B1, a wind turbine rotor blade with a serrated panel having the features of the preamble of claim 1 has become known. Parts of the serrated panel are provided with ridges or fins.

Departing therefrom, it is an object of the invention to provide a serrated panel offering improved noise reduction.

This problem is solved by the serrated panel with the features of claim 1. Preferred aspects are given in the dependent claims.

The serrated panel is designed for a trailing edge of a wind turbine rotor blade and comprises:
- a plurality of teeth, each tooth having a tip, a base, two edges running from the tip to the base, a pressure side surface and a suction side surface, and
- a plurality of vanes arranged side by side with a gap between each pair of adj acent vanes, each vane beginning at one of said edges and extending rearwards in a longitudinal direction, wherein each vane has a vane length, a vane width and a vane height, wherein
- the pressure side surfaces and/or suction side surfaces of the teeth comprise a base surface and a plurality of humps, wherein each hump has a crest and a sloped, circumferential surface that transitions smoothly into the base surface.

The serrated panel is designed for being integrated into or attached to a wind turbine rotor blade at a trailing edge of the wind turbine rotor blade. When the serrated panel is mounted to the wind turbine rotor blade, the teeth extend beyond the wind turbine rotor blade's trailing edge. In particular, the teeth may be arranged such that the bases of the teeth are substantially aligned with the trailing edge of the wind turbine rotor blade.

Each tooth has a tip and two edges running from the tip to one end of the base. The edges may be straight, giving the tooth a triangular shape. However, the edges may also include some curvature. The teeth are arranged side-by-side. The base may be formed by an imaginary, straight line which connects two forward ends of recesses formed between adjacent teeth. A longitudinal axis of a tooth extends from the base to the tip, and generally describes a longitudinal direction of the tooth. The longitudinal axis may in particular extend through a midpoint of the base. The point where the longitudinal axis bisects the base may also be shifted towards one side, for example when the tooth has an asymmetrical shape. The geometry of all the teeth may be the same, so that all teeth have the same width, length and shape. However, this is not required.

Each tooth has a pressure side surface and a suction side surface. In use, the air surrounding the wind turbine rotor blade passes these aerodynamic surfaces. The pressure side surface of the tooth will point to the same side as the pressure side of the wind turbine rotor blade. The suction side surface of the tooth will point to the same side as the suction side of the wind turbine rotor blade. The suction side surfaces of the teeth may be substantially flat, but they may also comprise some curvature and or/additional surface features. The pressure side surfaces may have a ridge aligned with the longitudinal axis and two adjacent planar surfaces running from the ridge to one of the two edges.

In addition to the teeth having the described basic geometry, the serrated panel includes a plurality of vanes extending from one of said edges in a rearward direction. The vanes provide the teeth with an additional aerodynamic function. For this reason, the vanes are sometimes referred to secondary aerodynamic elements, with the teeth referred to as primary aerodynamic elements. The vanes have a longitudinal direction which may be parallel to a longitudinal axis of the respective tooth. The cross section of a vane may be constant along the length of the vane. Typically, the vane length is larger than the vane width, for example by a factor of at least two, at least five or at least ten.

In accordance with the invention, the pressure side surface and/or the suction side surface of each tooth comprises a base surface. The base surface describes the overall shape of the pressure side and/or suction side of the respective tooth, and may be planar or substantially planar and/or may include some curvature. Further, the pressure side surface and/or suction side surface of each tooth comprises a plurality of humps. The humps are arranged on the base surface which is surrounding the humps. The humps are arranged within the surface area of the serrated panel circumscribed by the base and the two edges of the respective tooth. Each hump has a crest and a sloped, circumferential surface that transitions smoothly into the base surface. "To transition smoothly" means there is no gap, step or kink where the base surface transitions into the circumferential surface of the hump, so that air passing by the pressure side surface and/or suction side surface can be guided by the humps as desired, that is smoothly and without causing unwanted turbulences.

The crest of the hump is the point on the hump's surface having the largest distance from the base surface. This distance defines a height of the hump. A line through the crest and perpendicular to the base surface defines a vertical midline of the hump. The circumferential surface surrounds the vertical midline. In any cross section including the vertical midline, the circumferential surface is described by two curved lines, each having one end at the crest and another end smoothly transitioning into the base surface.

The inventors realized that providing the pressure side surfaces and/or suction side of the teeth with the humps serves to guide the airflow coming from a leading edge of the serrated panel/from the base of the respective tooth smoothly towards the vanes, without causing unwanted turbulences. Serrated panels with the humps showed better noise reduction that conventional serrated panels.

### A2

In an aspect, the crests are rounded. In particular, the two curved lines mentioned above (which describe the circumferential surface in any cross section including the vertical midline of the hump) will each have an end arranged perpendicular to the vertical midline of the hump. The two curved lines may together form a bell-shape. In general, it is also possible to provide the humps with a sharp-edged or pointed tip. A rounded crest was found to produce less turbulences and less noise.

### A3

In an aspect, the humps are circular or elliptical in a section in a first plane parallel to the base surface. The first plane is perpendicular to the vertical midline of the hump. The circumferential surface may be rotationally symmetrical. If the humps are elliptical, a main axis/long axis of the ellipse may be aligned with the longitudinal direction of the vanes. In the first plane, the humps may also have any elongated shape aligned with the longitudinal direction of the vanes.

### A4

In an aspect, the humps are arranged along straight lines which are aligned with or parallel to the longitudinal direction of the vanes. Any number of humps may be arranged on such a straight line, including only one hump, two humps, three to five humps or more.

### A5

In an aspect, the humps along the straight lines are arranged directly adjacent to one another. At least two humps may be arranged along one straight line. In a section along a plane perpendicular to the base surface and including the straight line, the circumferential surfaces of the adjacent humps may transition directly into one another, without any section of the base surface therebetween.

### A6

In an aspect, a distance between neighboring straight lines corresponds to a hump width. When looking at the arrangement of humps along the direction of airflow, the humps arranged along neighboring straight lines will be placed side by side without a gap in between. In particular, the entire width of a tooth (measured along the direction of the base) may be covered with humps.

### A7

In an aspect, every other one of the vanes is aligned with one of the straight lines. The remaining vanes may be arranged between two neighboring straight lines, in other words, aligned with a valley between adjacent humps.

### A8

In an aspect, the humps arranged along one of the straight lines are offset in the longitudinal direction from the humps arranged in a neighboring one of the straight lines. When seen from the side, the humps are arranged in a staggered manner. A valley or gap formed between two longitudinally adjacent humps arranged along one straight line is at least partly covered or closed by an offset hump arranged along the adjacent straight line. This helps suppressing transverse flow near the base surface, so that the air flows substantially along the longitudinal direction when reaching the edge of the tooth/the vanes.

### A9-A12

In an aspect, the offset in the longitudinal direction is in a range of 40 % to 60 % of a hump length. In an aspect, the humps have a hump width in a range of 1 to 2 times of the vane width. In an aspect, the humps have a hump length which is in a range of 1 to 5 times of the vane width. In an aspect, the humps have a hump height which is in a range of 50 % to 90 % of the vane height. These dimensions where found to have positive influence on the noise mitigating properties of the serrated panel while introducing no or only little additional drag.

### A13

In an aspect, the pressure side surfaces along the edges comprise a border section in which no humps are arranged. The border section may be strip-shaped.

### A14

In an aspect, a plurality of transition elements is arranged in the border section, wherein each transition element is arranged forward of one of the vanes and has an outer surface forming a smooth transition between the vane and the base surface of the pressure side surface, in particular wherein a width of the transition element is larger than the vane width. The transition elements help achieving a smooth flow in particular at the edges.

### A15

In an aspect, the serrated panel comprises an attachment section having a leading edge, an attachment surface for connecting the serrated panel to a trailing edge of a wind turbine rotor blade, a rear end, and an external surface opposite the attachment surface, wherein the bases of the teeth are arranged at the rear end. The attachment section can be connected to the wind turbine rotor blade in particular by means of an adhesive, for example in a liquid form or as an adhesive tape. The attachment section forms a front portion of the serrated panel. The front edge of the attachment section can be referred to as leading edge. The other end of the attachment section is the rear end. The plurality of teeth altogether form a rear portion of the serrated panel.

In the following, the invention is explained in greater detail based on drawings. The figures show:
- Fig. 1: shows a wind turbine rotor blade with a serrated panel in a perspective view,
- Fig. 2: a serrated panel in a top view (vanes and humps not shown),
- Fig. 3a: a tooth of the serrated panel of Fig. 2 according to the invention in a top view,
- Fig. 3b: a section of the tooth of Fig. 3a in a top view,
- Fig. 4: a section of the tooth of Fig. 3a in a perspective view.

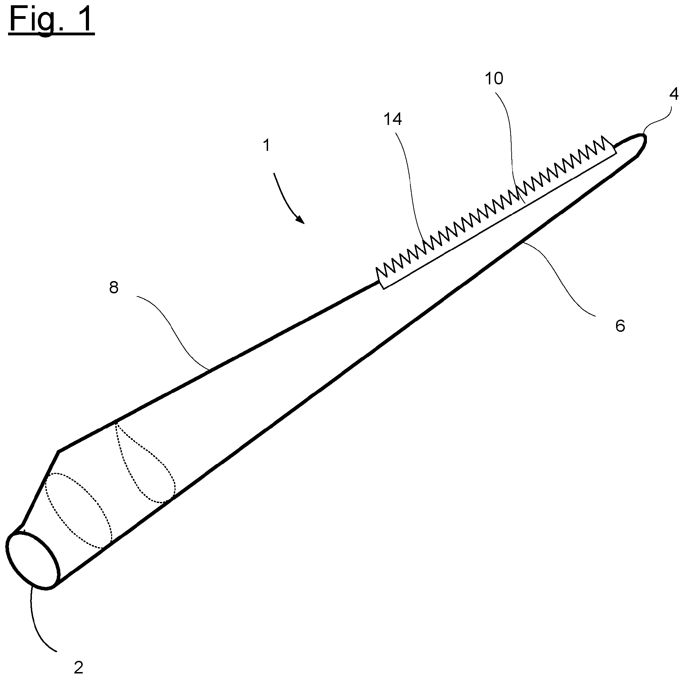

Figure 1 shows a wind turbine rotor blade 1 having a blade root 2, a blade tip 4, a leading edge 6 and a trailing edge 8. In cross-section, the wind turbine rotor blade 1 has an aerodynamic profile. The spanwise direction extends from the blade root 2 towards the blade tip 4. The chordwise direction extends perpendicular to the spanwise direction from the leading edge 6 towards the trailing edge 8.

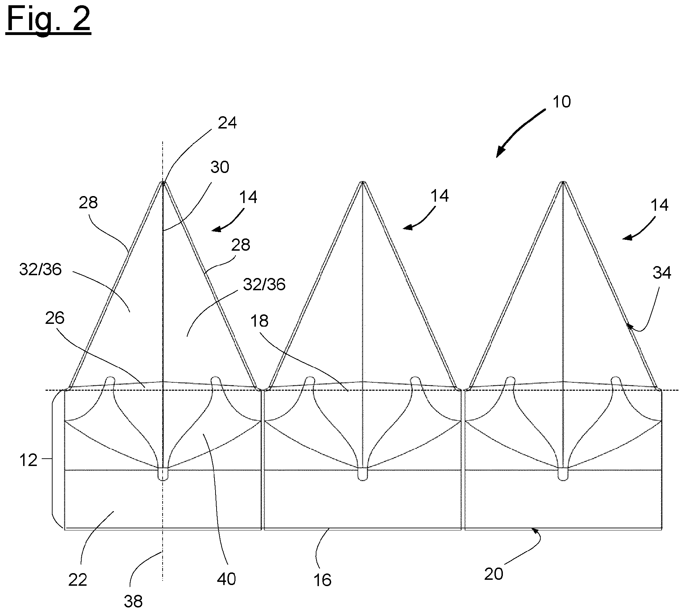

An outer length section of the wind turbine rotor blade 1 is provided with a serrated panel 10, which is attached to an outer surface of the wind turbine rotor blade 1 and has a plurality of teeth 14. The serrated panel 10 is positioned such that the bases 26 (see Fig. 2) of the teeth 14 are aligned with the trailing edge 8.

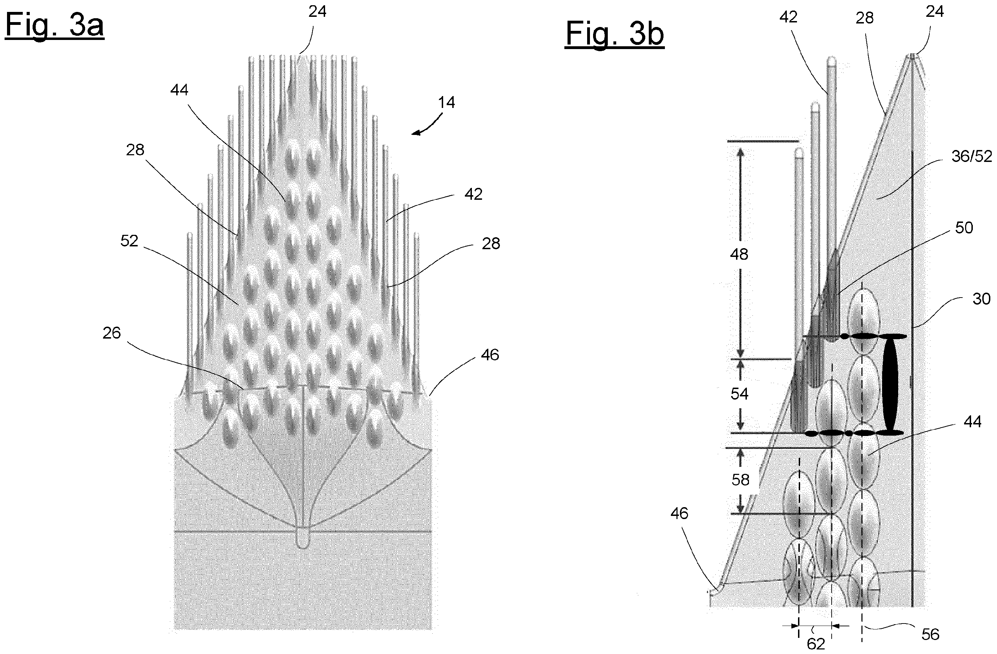

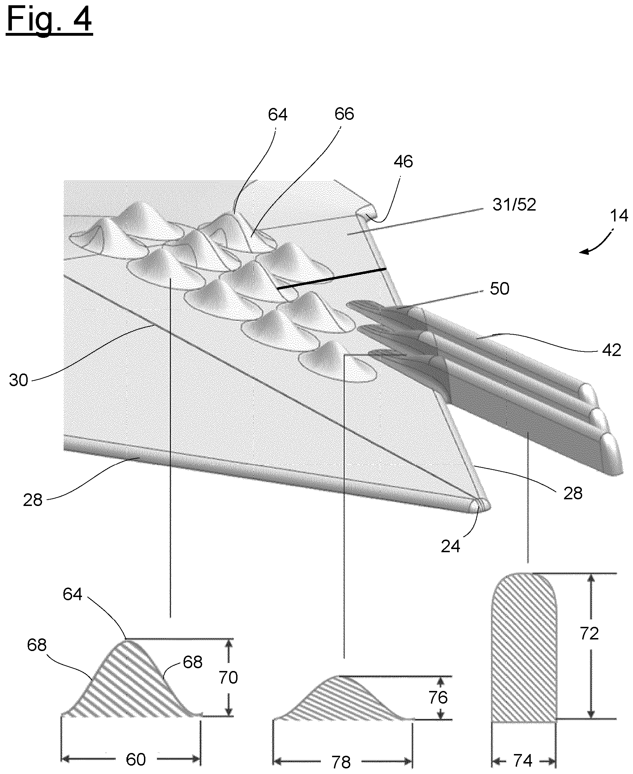

The serrated panel 10 of Fig. 2 has an attachment section 12 and a plurality of teeth 14. In Fig. 2, only the basic geometry of the teeth 14 is shown, the vanes and humps are drawn in Figs. 3a, 3b and 4 only.

The attachment section 12 has a leading edge 16 and a rear end 18 indicated by a dashed line. At the back of the attachment section 12, away from the viewer, the attachment section 12 has an attachment surface 20 extending over the entire back of the attachment section 12. The outer surface of the attachment section 12 facing the viewer forms an external surface 22.

Each of the teeth 14 has a tip 24 and a base 26 indicated in Fig. 2 by a double arrow. The base 26 is disposed at the rear end 18 of the attachment section 12, where the attachment section 12 transitions into the teeth 14. Each tooth 14 further has two side edges 28, each running from the tip 24 to one end of the base 26. The side of the teeth 14 facing the viewer in Fig. 1 is a pressure side surface 32, the side facing away from the viewer is a suction side surface 34. The pressure side surface 32 is divided into two planar surfaces 36 by a ridge 30 formed along a longitudinal axis 38 of the tooth 14. The planar surfaces 36 extend from the ridge 30 to the respective side edge 28.

The external surface 22 for each tooth 14 comprises a transition surface 40 forming a transition between the leading edge 16 and the pressure side surface 32 of the respective tooth 14.

We note the lines drawn within the boundary lines of the serrated panel 10 in Fig. 2 and the remaining Figs. originate from a CAD model describing the surface topology. These lines do not necessarily correspond to visible edges of the serrated panel 10.

Fig. 3a shows the tooth 14 of the serrated panel of Fig. 2 which is provided with a plurality of vanes 42. The vanes 42 are arranged side by side along each of the two edges 28, from a recess 46 formed between adjacent teeth 14 at one end of the base 26 up to a point at or near the tip 24. A plurality of humps 44 is arranged on the base surface 52.

In Figs. 3b and 4, only three vanes 42 and a plurality of humps 44 are shown. In reality, the tooth 14 is provided with more than three vanes 42. Similarly, only some of the humps 44 are shown, while the pressure side surface 32 of the tooth 14 may be provided with humps 44 over its full width. (see Fig. 3a)

Fig. 3b shows the vanes 42 having a vane length 48 and being arranged side by side with a gap between each pair of neighboring vanes 42. The vanes 42 extend from the edge 28 up to a free end arranged rearwards of the edge 28. Forward of the edge 28, the pressure side surface 32 is provided with a plurality of transition elements 50. Each transition element 50 has a transition element length 54, is arranged forward of one of the vanes 42 and has an outer surface forming a smooth transition between the vane 42 and the base surface 52 of the tooth 14. The base surface 52 corresponds to the planar surfaces 36 shown in Fig. 2. The humps 44 are emerging from the base surface 52.

The humps 44 are arranged along straight lines 56 which are aligned with or parallel to the longitudinal direction of the vanes 42. In the longitudinal direction, the humps 44 have a hump length 58. Along the straight lines 56, the humps 44 are arranged directly adjacent to one another. A hump width 60 (see Fig. 3b) is selected such that a distance 62 between neighboring straight lines 56 corresponds to the hump width 60.

Every other one of the vanes 42 is aligned with one of the straight lines 56, namely the left-most vane 42 and the right-most vane 42 shown in Fig. 3b. The vane 42 arranged between the left-most vane 42 and the right-most vane 42 is just between two neighboring straight lines 56; there are no humps 44 aligned with this vane 42. The humps 44 arranged along one of the straight lines 56 are offset in the longitudinal direction from the humps 44 arranged in a neighboring one of the straight lines 56.

As best seen in Fig. 3b, the pressure side surface 32 of the tooth 14 comprises a strip-shaped border section along the edges 28 which is free of humps 44. The transition elements 50 are placed in the border section.

In the perspective view of Fig. 4, which shows the same elements as Fig. 3b, the geometry of the humps 44 can be seen more clearly. Each hump 44 has a crest 64 and a circumferential surface 66 which transitions smoothly into the base surface 52.

To the bottom left, Fig. 4 shows one of the humps 44 in cross section. The hump 44 has a hump height 70 and a hump width 62. The circumferential surface 66 in cross section is described by two curved lines 68 each having one end at the crest 64 and another end smoothly transitioning into the base surface 52.

To the bottom right, Fig. 4 shows one of the vanes 42 in cross section. The vane 42 has a vane height 72 and a vane width 74. A pressure side surface of the vane 42 is rounded, a suction side surface of the vane 42 is flat. The side edges of the vanes 42 are parallel to each other.

Between the cross section of the hump 44 and the cross section of the vane 42, Fig. 4 further shows a cross section trough one of the transition elements 50. The transition element 50 has a transition element height 76 and a transition element width 78.

In the example shown, the hump width 60 is about the same as the transition element width 78. The hump width 60 and the transition element width 78 are both larger than the vane width 74, by a factor in the range of 1.0 to 2.0.

### List of reference numerals

- 1: wind turbine rotor blade
- 2: blade root
- 4: blade tip
- 6: leading edge
- 8: trailing edge
- 10: serrated panel
- 12: attachment section
- 14: tooth
- 16: leading edge
- 18: rear end
- 20: attachment surface
- 22: external surface
- 24: tip
- 26: base
- 28: side edge
- 30: ridge
- 32: pressure side surface
- 34: suction side surface
- 36: planar surface
- 38: longitudinal axis
- 40: transition surface
- 42: vane
- 44: hump
- 46: recess
- 48: vane length
- 50: transition element
- 52: base surface
- 54: transition element length
- 56: straight line
- 58: hump length
- 60: hump width
- 62: distance
- 64: crest
- 66: circumferential surface
- 68: curved lines
- 70: hump height
- 72: vane height
- 74: vane width
- 76: transition element height
- 78: transition element width

## Claims

1. A serrated panel (10) for a trailing edge (8) of a wind turbine rotor blade (1), the serrated panel (10) comprising
• a plurality of teeth (14), each tooth (14) having a tip (24), a base (26), two edges (28) running from the tip (24) to the base (26), a pressure side surface (32) and a suction side surface (34), and
• a plurality of vanes (42) arranged side by side with a gap between each pair of adjacent vanes (42), each vane (42) beginning at one of said edges (28) and extending rearwards in a longitudinal direction, wherein each vane (42) has a vane length (48), a vane width (74) and a vane height (72), **characterized in that**
• the pressure side surfaces (32) and/or suction side surfaces (34) of the teeth (14) comprise a base surface (52) and a plurality of humps (44), wherein each hump (44) has a crest (64) and a sloped, circumferential surface (66) that transitions smoothly into the base surface (52).

2. The serrated panel (10) of claim 1, wherein the crests (64) are rounded.

3. The serrated panel (10) of claim 1 or 2, wherein in a section in a first plane parallel to the base surface (52), the humps (44) are circular or elliptical.

4. The serrated panel (10) of any of the claims 1 to 3, wherein the humps (44) are arranged along straight lines (56) which are aligned with or parallel to the longitudinal direction of the vanes (42).

5. The serrated panel (10) of claim 4, wherein the humps (44) along the straight lines (56) are arranged directly adjacent to one another.

6. The serrated panel (10) of claim 4 or 5, wherein a distance (62) between neighboring straight lines (56) corresponds to a hump width (60).

7. The serrated panel (10) of any of the claims 4 to 6, wherein every other one of the vanes (42) is aligned with one of the straight lines (56).

8. The serrated panel (10) of any of the claims 4 to 7, wherein the humps (44) arranged along one of the straight lines (56) are offset in the longitudinal direction from the humps (44) arranged in a neighboring one of the straight lines (56).

9. The serrated panel (10) of claims 8, wherein the offset in the longitudinal direction is in a range of 40 % to 60 % of a hump length (58).

10. The serrated panel (10) of any of the claims 1 to 9, wherein the humps (44) have a hump width (60) in a range of 1 to 2 times of the vane (42) width.

11. The serrated panel (10) of any of the claims 1 to 10, wherein the humps (44) have a hump length (58) which is in a range of 1 to 5 times of the vane width (74).

12. The serrated panel (10) of any of the claims 1 to 11, wherein the humps (44) have a hump height (70) which is in a range of 50 % to 90 % of the vane height (72).

13. The serrated panel (10) of any of the claims 1 to 12, wherein the pressure side surfaces (32) along the edges (28) comprise a border section in which no humps (44) are arranged.

14. The serrated panel (10) of claim 13, wherein a plurality of transition elements (50) are arranged in the border section, wherein each transition element (50) is arranged forward of one of the vanes (42) and has an outer surface forming a smooth transition between the vane (42) and the base surface (52) of the pressure side surface (32), in particular wherein a transition element width (78) is larger than the vane width (74).

15. The serrated panel (10) of any of the claims 1 to 14, wherein the serrated panel (10) comprises an attachment section (12) having a leading edge (16), an attachment surface (20) for connecting the serrated panel (10) to a trailing edge of a wind turbine rotor blade, a rear end (18), and an external surface (22) opposite the attachment surface (20), wherein the bases (26) of the teeth (14) are arranged at the rear end (18).
